# EUROPÄISCHE PATENTSCHRIFT

(11) **EP 3 524 463 B1**
(45) Veröffentlichungstag und Bekanntmachung des Hinweises auf die Patenterteilung: **20.09.2023**
(21) Anmeldenummer: 19156329.5
(22) Anmeldetag: 11.02.2019
(51) Int. Cl.: B60L 1/02, B60L 3/00, B60L 53/22, B60L 53/12, H05K 7/20, H01L 23/473

(54) **ELEKTRONIKEINHEIT FÜR INDUKTIVE LADESYSTEME**
ELECTRONIC UNIT FOR INDUCTIVE CHARGING SYSTEMS
UNITÉ ÉLECTRONIQUE POUR SYSTÈMES DE CHARGE INDUCTIVES

(30) Priorität: 09.02.2018 DE 102018102993
(43) Veröffentlichungstag der Anmeldung: 14.08.2019
(73) Patentinhaber: Zollner Elektronik AG, 93499 Zandt (DE)
(72) Erfinder: Jetz, Markus, 94264 Langdorf (DE); Tuerk, Holger, 92224 Amberg (DE)
(74) Vertreter: Hannke Bittner & Partner mbB Regensburg

(56) Entgegenhaltungen:
- EP-A2- 2 482 438
- DE-A1-102010 042 182
- DE-U1-202016 105 142
- JP-A- 2011 029 480
- US-A1- 2006 207 780
- US-A1- 2010 321 889
- US-A1- 2011 181 105

## Beschreibung

Die vorliegende Erfindung bezieht sich auf eine Elektronikeinheit, insbesondere zum Betrieb eines induktiven Ladesystems für Kraftfahrzeuge. Die Erfindung wird unter Bezugnahme auf Ladesysteme für Personenkraftfahrzeuge beschrieben, es wird jedoch darauf hingewiesen, dass die vorliegende Erfindung auch auf andere Kraftfahrzeuge anwendbar ist, beispielsweise auf LKW, Boote und dergleichen. Die Elektronikeinheit kann auch außerhalb von Fahrzeugen Verwendung finden. Z. B. in industriellen Anwendungen wie z. B. Stromversorgungen für Hochleistungslaser, Stromversorgungen für Hochleistungs-LEDs, Batterieladern. Die Elektronikeinheit kann auch als Teil eines Photovoltaik Wechselrichters Verwendung finden.

Aus dem Stand der Technik sind derartige induktive Ladesysteme bekannt. Es sind einerseits Ladesysteme bekannt, bei denen der Benutzer das Fahrzeug mittels eines Kabels lädt. Neuerdings sind jedoch auch Ladesysteme bekannt, welche induktiv arbeiten, wobei beispielsweise eine stationär montierte Spuleneinheit vorgesehen ist, welche mit einer im oder am Kraftfahrzeug vorgesehenen Spule zusammenwirkt, um das Kraftfahrzeug zu laden. Derartige Ladesysteme benötigen üblicherweise diverse Elektronik-elemente, welche stark erhitzen.

Aus der DE 10 2010 042 182 A1 ist eine Leistungselektronik-Anordnung mit mehrseitiger Induktorkühlung bekannt, wobei die Anordnung ein Gehäuse mit einem primären Teil und einem sekundären Teil aufweist sowie mit mindestens einem Hohlraum innerhalb dessen ein Induktor (Spule) angeordnet ist.

DE 20 2016 105 142 U1 offenbart ein Batterieladegerät für ein spurgebundenes Fahrzeug umfassend einen ersten Leiterplattenbaustein mit einer ersten Leiterplatte, auf der Leistungshalbleiter für eine Eingangsseite des Batterieladegeräts angeordnet sind und einen zweiten Leiterplattenbaustein mit einer zweiten Leiterplatte, auf der Leistungshalbleiter für eine Ausgangsseite des Batterieladegeräts angeordnet sind, wobei weiterhin wenigstens ein Kühlkörper vorgesehen ist, der auf dem ersten Leiterplattenbaustein angeordnet ist.

Aus der JP 2011 029 480 A ist weiterhin eine Stromversorgungsvorrichtung bekannt, wobei Stromversorgungseinheiten, welche elektronische Komponenten umfassen, in einem Gehäuse angeordnet sind und es sich bei der Stromversorgungsvorrichtung um einen in ein Fahrzeug montierten Wechselrichter, Umrichter oder dergleichen handelt.

Die US 2006/207780 A1 offenbart ein Leistungssteuergerät mit einem Gehäuse für elektronische Komponenten mit einem Ladewandler-Abschnitt, welcher von einer Batterie gespeiste Gleichspannung verstärkt und einem Antriebswechselrichter-Abschnitt, welcher eine erhöhte Gleichspannung in eine Wechselspannung umwandelt und die umgewandelte Wechselspannung an den Elektromotor abgibt.

Weiterhin offenbart auch die EP 2 482 438 A2 einen Stromrichter, in dem Halbleitermodule zum Downsizing auf beiden Oberflächen eines Kühlers angeordnet sind und gleichzeitig eine hervorragende Verbindung zwischen Steuerplatinen und eine niederinduktive Verbindung zwischen Glättungskondensatoren und den Halbleitermodulen hergestellt wird.

US 2010/321889 A1 offenbart eine Leistungsumwandlungsvorrichtung mit einem Wandler, der eine Spannung einer Gleichstromversorgung herauf- oder herabsetzt und einem Wechselrichter, der die durch den Wandler erhaltene Gleichspannung in eine Wechselspannung umwandelt, um einen Elektromotor anzutreiben.

Aus der US 2011/181105 A1 ist eine Leistungsumwandlungsvorrichtung für die Verwendung in Fahrzeugen bekannt, wobei die Leistungsumwandlungsvorrichtung eine Vielzahl von Halbleitermodulen, in denen Halbleiterbauelemente mit einem Harz vergossen sind und von denen jedes einen Modulkörper, einen Eingangsanschluss und einen Ausgangsanschluss hat aufweist und einen Kühlkörper mit einer rechteckigen Parallelepipedform, der Kühlungshauptebenen auf jeweils gegenüberliegenden Oberflächen hat.

Aus diesem Grund ist es bekannt, dass derartige Ladesysteme Kühlelemente aufweisen. Zum Teil hat sich jedoch gezeigt, dass diese Kühlelemente nicht ausreichend sind, um eine ausreichende Kühlleistung zur Verfügung zu stellen. Der vorliegenden Erfindung liegt daher die Aufgabe zugrunde, derartige Elektronikeinheiten, insbesondere auch hinsichtlich der Kühlleistung zu verbessern. Diese Aufgaben werden erfindungsgemäß durch den Gegenstand des unabhängigen Anspruchs erreicht. Vorteilhafte Ausführungsformen und Weiterbildungen sind Gegenstand der Unteransprüche.

Eine erfindungsgemäße Elektronikeinheit zum Betrieb eines induktiven Ladesystems für Kraftfahrzeuge weist ein Gehäuse auf, innerhalb dessen eine Leistungselektronikeinheit mit wenigstens einem Leistungselektronikelement angeordnet ist. Weiterhin weist die Einheit eine Schnittstelle auf, um die Elektronikeinheit elektrisch wenigstens mittelbar mit einer Spuleneinheit zu verbinden sowie eine zweite Schnittstelle, um die Elektronikeinheit wenigstens mittelbar mit einer Fahrzeugbatterie zu verbinden. Die beiden elektrischen Schnittstellen stellen bevorzugt den Ein- und Ausgang der Elektronikeinheit dar. Der Anschluss einer Spuleneinheit, welche in Kombination mit einem Gleichrichter eine Gleichspannung für den Eingang der Elektronikeinheit erzeugt, ist nur eine der zahlreichen Möglichkeiten. Erfindungsgemäß ist die Elektronikeinheit ein DCDC-Wandler. Das heißt, während des Betriebs des DCDC-Wandlers liegen bevorzugt am Ein- und Ausgang Gleichspannungen an und es fließen Gleichströme. Weiterhin weist die Elektronikeinheit eine Kühleinrichtung auf, welche zum Kühlen der Leistungselektronikeinheit geeignet und bestimmt ist.

Erfindungsgemäß erstreckt sich diese Kühleinrichtung wenigstens abschnittsweise zwischen Bestandteilen der Leistungselektronikeinheit.

Während im Stand der Technik derartige Kühleinrichtungen üblicherweise etwa an der Unterseite oder der Oberseite von Gehäusen angeordnet sind, wird im Rahmen der Erfindung vorgeschlagen, die Kühleinheit derart in das Gehäuse zu integrieren, dass die Leistungselektronikeinheit in mehreren Bereichen an der Kühleinrichtung platziert werden kann und insbesondere, wie gesagt, ein Teil der Kühleinrichtung zwischen Leistungselektronikelementen, etwa den unten genauer beschriebenen Leistungselektronikplatinen, verläuft.

Auf diese Weise kann eine effizientere Kühlung der Leistungselektronikeinheit erreicht werden, da diese an mehreren Bereichen gekühlt werden kann. Darüber hinaus wird die zur Verfügung stehende Kühlfläche maximiert, was z. B. planare Aufbautechniken erlaubt, deren Flächenverbrauch im Mittel höher ist als bei anderen Aufbautechniken. Bevorzugt liegen Elemente der Leistungselektronik direkt an einer Kühleinrichtung an bzw. sind unmittelbar benachbart zu dieser. Dabei ist es auch möglich, dass diese Leistungselektronikeinheit mit der Kühleinrichtung über eine weitere Substanz in Verbindung steht, etwa über eine thermisch leitende Paste. Auch wäre es möglich, dass die Leistungselektronikeinheit mit Bereichen der Kühleinrichtung in thermisch leitender Verbindung steht. Dabei kann es sich auch um eine elastische Substanz handeln, so dass auch auf die Vorrichtung wirkende Stöße leichter abgefedert bzw. gedämpft werden können.

Bevorzugt ist das Gehäuse wenigstens teilweise aus einem Kunststoff hergestellt. Bei einer weiteren vorteilhaften Ausführungsform ist das Gehäuse wenigstens teilweise aus einem Metall, beispielsweise Aluminium hergestellt.

Bei einer weiteren vorteilhaften Ausführungsform handelt es sich bei dem Gehäuse um ein im Wesentlichen geschlossenes Gehäuse. Es wäre jedoch auch möglich, dass das Gehäuse etwa Kühlschlitze oder Kühlöffnungen aufweist.

Bei einer weiteren vorteilhaften Ausführungsform ist ein Abstand zwischen der Kühleinrichtung bzw. einer Begrenzungswandung der Kühleinrichtung und der Leistungselektronik geringer als 10 cm, bevorzugt geringer als 8 cm, bevorzugt geringer als 5 cm, bevorzugt geringer 3 cm und besonders bevorzugt geringer als 2 cm. So ist es beispielsweise möglich, dass eine Platine einer Leistungselektronik unmittelbar an einer die Kühleinrichtung begrenzenden Wandung anliegt. Es wäre jedoch auch möglich, dass elektronische Komponenten der Leistungselektronik unmittelbar an der Kühleinrichtung anliegen, wie z. B. Halbleiterschalter im TO-220, TO-247, TO-257 oder vergleichbare Gehäuse. Auch andere Gehäusebauformen wie z. B. ISOTOP Gehäuse mit Schraubanschlüssen, oder auch in die Leiterplatte integrierte Halbleiterchips.

Bei einer weiteren vorteilhaften Ausführungsform ist wenigstens eine Schnittstelle und sind bevorzugt beide Schnittstellen abgedichtet. Auf diese Weise wird verhindert, dass über diese Schnittstellen, bei denen es sich insbesondere um elektrische Schnittstellen handelt, Flüssigkeit in das Innere des besagten Gehäuses eintreten kann.

Bei einer weiteren bevorzugten Ausführungsform kann wenigstens eine Schnittstelle (insbesondere diejenige für den elektrischen Leistungsanschluss) eine Filtereinrichtung aufweist. So ist es möglich dass die erste Schnittstelle eine Eingangsschnittstelle ist und/oder ein elektrisches Eingangsfilter aufweist. Entsprechend kann auch die zweite Schnittstelle eine Ausgangsschnittstelle sein und ein elektrisches Ausgangsfilter aufweisen. Diese Filtereinrichtungen können dabei insbesondere Glättungseinrichtungen sein, welche die durch das Takten eines DC/DC- Wandlers erzeugte Gegentaktstromwelligkeit (differential current ripple) glätten. Diese Glättungseinrichtungen können Gegentaktdrosseln und x-Kondensatoren aufweisen, welche den Gegentaktstörstrom dämpfen bzw. ableiten.

Durch das Takten der Leistungshalbleiterschalter entstehen transiente Spannungsänderungen, die in Verbindung mit Streukapazitäten Gleichtaktstörströme hervorrufen.

Die Filtereinrichtungen können insbesondere auch Gleichtaktdrosseln und y-Kondensatoren enthalten, welche den Gleichtaktstörstrom (common mode current) dämpfen bzw. ableiten.

Daneben können die Schnittstellen einen Kurzschlussschutz aufweisen und/oder einen Transientenschutz (hinsichtlich eines Einschwingvorgangs und/oder einer extern erzeugten transienten Überspannung durch z. B. einen Blitz oder externen Kurzschluss, oder das Auslösen einer Überstromschutzeinrichtung eines benachbarten elektrischen Verbrauchers).

Bei einer weiteren vorteilhaften Ausführungsform weist die Elektronikeinheit mindestens eine Speicherdrossel auf. Mit dieser Speicherdrossel kann durch das hochfrequente Takten des DCDC-Wandlers der Energiefluss vom Ein- zum Ausgang bzw. vom Ausgang zum Eingang geregelt werden.

Bei einer weiteren vorteilhaften Ausführungsform erstreckt sich die Kühleinrichtung wenigstens abschnittsweise zwischen Bestandteilen der Speicherdrossel. Bevorzugt ist hier also die Speicherdrossel mehrteilig aufgebaut. So kann die Speicherdrossel etwa eine Ausnehmung aufweisen, in welche sich Bestandteile der Kühleinrichtungen erstrecken. Bei der Speicherdrossel handelt es sich insbesondere ebenfalls um ein elektrisches oder elektronisches Element, welches sich stark erwärmt. Aus diesem Grunde wird auch hier eine entsprechend effiziente Kühlung der Speicherdrossel vorgeschlagen, da die Kühleinrichtung, wie oben erwähnt, bevorzugt an mehreren Bereichen der Speicherdrossel anliegen kann. Es wird darauf hingewiesen, dass die Speicherdrossel auch als Drosseleinrichtung bezeichnet werden kann.

Die Speicherdrossel weist eine Induktivität (Speicherinduktivität) L auf. Im Rahmen einer vorteilhaften Ausführungsform wird vorgeschlagen, diese Induktivität L in zwei Induktivitäten und insbesondere in zwei gleiche identische Speicherinduktivitäten mit halber Induktivität L/2 zu teilen. Diese beiden Induktivitäten bzw. Spulen werden anschließend bevorzugt in Reihe geschaltet um wieder den Wert der Induktivität L zu erreichen. Es kann aber auch zweckmäßig sein, die Speicherdrossel nicht zu teilen und somit nur auf einer Seite anzuordnen. Die Anordnung einer Speicherdrossel kann auch am Ende der Kühlplatte mit reduzierter Kühlmöglichkeit erfolgen.

Bevorzugt ist wenigstens eine dieser Speicherdrosseln bzw. Induktivitäten in flacher Bauart ausgeführt, bevorzugt in einer Planartechnik. Bevorzugt sind die Speicherdrosseln als Planarspeicherdrosseln aufgebaut. Bevorzugt weisen diese Speicherdrosseln Kerne auf, und bevorzugt Planarkerne. Dabei werden bevorzugt mehrere Planarkernsätze zum Aufbau der Planarspeicherdrosseln verwendet. Dies ist insbesondere bei höheren Leistungen und damit bei höheren Spitzenströmen vorteilhaft. Es kann aber auch ein anderer Aufbau der Drossel zweckmäßig sein, wie z. B. eine Ringkerndrossel, eine EE-Kern, EI-Kern, UU-Kern, Ul-Kern, PQ-Kern, RM-Kern Drossel u.v.m.

Bei der Anwendung von Planarspeicherdrosseln steigen ggfs. die Abmessungen in der Länge der Speicherdrossel. Dieses Problem kann dadurch gelöst werden, dass wie oben erwähnt die Planarspeicherdrosseln zweigeteilt werden.

Bei einer weiteren vorteilhaften Ausführungsform weist die Leistungselektronikeinheit wenigstens einen ersten Leistungselektronikträger auf sowie wenigstens einen zweiten Leistungselektronikträger, wobei sich die Kühleinrichtung wenigstens abschnittsweise zwischen diesem ersten Leistungselektronikträger und dem zweiten Leistungselektronikträger erstreckt. Auf diese Weise wird also vorgeschlagen, dass die Leistungselektronik auf zwei oder wenigstens zwei Einheiten aufgeteilt wird und die Kühleinrichtung zwischen diesen Einheiten angeordnet ist. So können beispielsweise zwei Elektronikplatinen vorgesehen sein, welche derart angeordnet sind, dass sich die Kühleinrichtung wenigstens abschnittsweise zwischen diesen beiden Elektronikträgern, insbesondere Platinen, erstreckt.

Erfindungsgemäß erstreckt sich dabei die Kühleinrichtung vollständig in wenigstens einer Richtung durch die Leistungselektronikeinheit hindurch. So ragt die Kühleinrichtung erfindungsgemäß in einer Längsrichtung des Gehäuses beidseitig über die Leistungselektronikeinheit hinaus. Bevorzugt ist die Kühleinrichtung in einem flächigen thermisch leitenden Kontakt mit der Leistungselektronikeinrichtung.

Erfindungsgemäß ist wenigstens die Leistungselektronikeinheit und/oder die Speicherdrossel mit der Induktivität L symmetrisch bezüglich einer vorgegebenen Symmetrieebene angeordnet. Bevorzugt ist hierzu in der Kühleinrichtung bzw. einer Kühlplatte ein Durchbruch vorgesehen, über den die beiden Speicherdrosseln mit jeweils der Induktivität L/2 miteinander verbunden werden. Diese Symmetrieebene verläuft erfindungsgemäß durch eine Längsrichtung der Kühleinrichtung. Die symmetrische Anordnung ermöglicht eine besonders vorteilhafte, gleichmäßige und effiziente Kühlung. Daneben erlaubt dieser symmetrische Aufbau dieser genannten Hardware auch eine Verbesserung der EMV (elektromagnetische Verträglichkeit)-Eigenschaften. Die hier beschriebene mittige Kühleinrichtung, bei der es sich, wie unten erwähnt, beispielsweise um eine Wasserkühlung handeln kann, ermöglicht eine besonders gleichmäßige Abfuhr der Verlustleistung. Daneben wird in der beschriebenen Art und Weise eine kompakte Bauweise der Elektronikeinheit ermöglicht.

Bei einer weiteren vorteilhaften Ausführungsform weist die Leistungselektronikeinheit Elemente auf, welche aus einer Gruppe von Elementen ausgewählt sind, welche Leistungstransistoren, Thyristoren und dergleichen enthält.

Bei einer bevorzugten Ausführungsform ist die Leistungselektronik gemeinsam mit der oder den Speicherdrosseln als 4-Schalter-Buck-Boost-Wandler (Four-Switch-Buck-Boost-Converter) aufgebaut. Ein derartiger Wandler stellt insbesondere eine Kombination aus einem Aufwärtswandler und einem Abwärtswandler dar. Dieser Aufwärtswandler und der Abwärtswandler weisen bevorzugt nur eine (gemeinsame) Induktivität bzw. Spuleneinrichtung auf. Dabei werden jedoch zwei in Serie geschaltete Spulen bevorzugt als nur eine Spuleneinrichtung angesehen.

Bevorzugt ist der Aufbau, insbesondere derjenige der Leistungselektronik symmetrisch. Besonders bevorzugt folgt der Aufbau der Symmetrie der leistungselektronischen Topologie eines 4-Schalter-Buck-Boost Wandlers.

Erfindungsgemäß ist die Elektronikeinheit symmetrisch um die Kühleinrichtung bzw. eine Kühleinrichtung angeordnet. Besonders bevorzugt sind dabei diejenigen Platinen, welche die Leistungshalbleiterschalter enthalten, insbesondere die Leistungsplatinen, direkt auf der Kühleinrichtung angeordnet. Bevorzugt enthält wenigstens eine dieser Leistungsplatinen und enthalten besonders bevorzugt beide Leistungsplatinen bzw. allgemein jede dieser Leistungsplatinen die interleaved betriebenen Buck- bzw. Boost-Halbbrücken der 4-Schalter-Buck-Boost-Technologie.

Bei einer weiteren bevorzugten Ausführungsform sind die Leistungsplatinen oben und unten, d.h. oberhalb und unterhalb der Kühleinrichtung im Wesentlichen und bevorzugt vollständig identisch.

Besonders bevorzugt verbinden die Speicherinduktivitäten die Buck- und Boost-Halbbrücken der 4-Schalter-Buck-Boost Topologie.

Bevorzugt ist wenigstens eine Speicherinduktivität und ist bevorzugt jede Speicherinduktivität mit der Induktivität L durch wenigstens zwei und bevorzugt genau zwei (insbesondere seriell) verschaltete (insbesondere identische) Speicherdrosseln mit wenigstens der Induktivität L/2 realisiert.

Bevorzugt ist die Speicherinduktivität als Planardrossel aufgebaut.

Bevorzugt ist für jede interleaved betriebene 4-Schalter-Buck-Boost-Topologie wenigstens und bevorzugt genau zwei (insbesondere seriell) verschaltete Speicherdrosseln mit jeweils der Induktivität L/2 vorgesehen. Die Speicherdrosseln mit jeweils der Induktivität L/2 sind bevorzugt wie die Leistungsplatinen symmetrisch (oben und unten) um die Kühleinrichtung angeordnet.

Bevorzugt sind die Speicherdrosseln mit jeweils der Induktivität L/2 mit Hilfe eines zur Kühleinrichtung elektrisch isolierten elektrischen Leiters durch die Kühleinrichtung hindurch miteinander elektrisch (insbesondere in Serie) geschalten.

Bevorzugt gibt es für wenigstens eine und besonders bevorzugt für jede der interleaved betriebenen 4-Schalter-Buck-Boost-Topologien einen zur Kühleinrichtung elektrisch isolierten elektrischen Leiter, welcher bevorzugt jeweils die beiden Speicherdrosseln mit jeweils einer vorgegebenen Induktivität und besonders bevorzugt der Induktivität L/2 elektrisch verbindet.

Bevorzugt besitzt jede der interleaved betriebenen Buck- und Boost-Halbbrücken einen eigenen Ein- und/oder Ausgangskondensator. Besonders bevorzugt bildet jede der interleaved betriebenen Buck- und Boost-Halbbrücken zusammen mit ihrem jeweiligen Ein- bzw. Ausgangskondensator einen Sternpunkt.

Besonders bevorzugt gibt es für wenigstens eine, bevorzugt für mehrere und besonders bevorzugt für jede der interleaved betriebenen 4-Schalter-Buck-Boost-Topologien einen zur Kühleinrichtung elektrisch isolierten elektrischen Leiter, welcher die beiden Sternpunkte der zusammengehörigen Buck- und Boost-Halbbrücken elektrisch verbindet.

Dabei werden besonders bevorzugt die jeweiligen Sternpunkte der interleaved betriebenen Buck- Halbbrücken und die jeweiligen Sternpunkte der interleaved betriebenen Boost-Halbbrücken (insbesondere mit Hilfe eines zur Kühleinrichtung elektrisch isolierten elektrischen Leiters) durch die Kühleinrichtung hindurch miteinander elektrisch verbunden.

Bei einer weiteren vorteilhaften Ausführungsform weist wenigstens eine und weist bevorzugt jede der Leistungsplatinen einen Stromschienenapparat auf. Der Stromschienenapparat übernimmt die Stromverteilung auf die interleaved arbeitenden Halbbrücken. Besonders bevorzugt trägt der Stromschienenapparat Ferrit- oder Eisenpulverkerne, die bevorzugt einen Teil des elektrischen Ein- bzw. Ausgangsfilters darstellen.

Besonders bevorzugt ist der Stromschienenapparat auf der Leistungsplatine oben identisch zu dem Stromschienenapparat auf der Leistungsplatine unten.

Dabei kann beispielsweise ein Aufwärtswandlerteil und ein Abwärtswandlerteil vorgesehen sein, welche bevorzugt elektrisch verbunden sind, wobei die Kühleinrichtung sich zwischen diesem Aufwärtswandlerteil und dem Abwärtswandlerteil erstreckt und/oder das Aufwärtswandlerteil den ersten Teil der Elektronikeinheit darstellt und das Abwärtswandlerteil den zweiten Teil.

Dieses Aufwärtswandlerteil und das Abwärtswandlerteil sind dabei bevorzugt symmetrisch und/oder bevorzugt identisch aufgebaut. Bevorzugt weist das Aufwärtswandlerteil und/oder das Abwärtswandlerteil wenigstens eine Kondensatoreinrichtung auf. Bevorzugt weist das Aufwärtswandlerteil und/oder das Abwärtswandlerteil wenigstens eine Schalteinrichtung und bevorzugt zwei Schalteinrichtungen auf. Bei den Schalteinrichtungen kann es sich beispielsweise um Mosfets handeln.

Die Maschen des Aufwärtswandlerteils und des Abwärtswandlerteils können problematisch sein, da innerhalb dieser Maschen sowohl ein hohes du/dt (hohe zeitliche Spannungsänderung) als auch ein hohes di/dt (hohe zeitliche Stromänderung) auftritt. Bevorzugt werden die Flächen dieser Maschen daher gering ausgelegt. Diese Maschen wirken nämlich wie Antennen und senden Störungen aus. Dabei ist die Sendeleistung dieser Antennen proportional zu der Fläche der Maschen, so dass diese Flächen gering gehalten werden sollten.

Daneben ist die Induktivität einer Masche auch proportional zu deren Fläche und wirkt sich so als eine Art (ungewollte) Kommutierungsinduktivität aus. Diese Kommutierungsinduktivitäten erzeugen beim Ausschalten der Ströme an den jeweiligen Schalteinrichtungen der elektronischen Schaltungen Überspannungen. Die Höhen dieser Überspannungen begrenzen die zulässigen Schaltgeschwindigkeiten. Falls jedoch aufgrund der hohen Kommutierungsinduktivitäten die Schaltgeschwindigkeiten reduziert werden müssen, erhöhen sich wiederum die Verluste des DC-DC - Wandlers.

Auch die Anschlussinduktivitäten der einzelnen Schalteinrichtungen erhöhen die Kommutierungsinduktivitäten. Um hohe Schaltgeschwindigkeiten und geringe Verluste bei gleichzeitig geringer Störsendung zu erlangen, werden für die Elektronikelemente und insbesondere für die Leistungselektronik und insbesondere für die oben erwähnten Schalteinrichtungen der Leistungselektronik bevorzugt SMD (surface mount device, oberflächenmontiertes Bauteil) - Elemente verwendet. Bevorzugt sind diese Bauteile bezogen auf die Kühleinrichtung auf der Rückseite der Leistungselektronikplatinen angeordnet und werden bevorzugt durch die Platine hindurch gekühlt.

Diese Vorgehensweise bringt den Nachteil mit sich, dass die Elektronikplatine den Temperaturtransport behindert und der Kühleffekt sich gegenüber THT-Bauteilen (Through Hole Technology) reduziert (derartige THT Elemente können direkt auf der Kühleinrichtung platziert werden). Bevorzugt wird daher den SMD-Bauteilen mehr Kühlfläche auf der Elektronikplatine zugewiesen. Alternativ oder zusätzlich wäre es auch möglich, mehrere SMD-Bauteile elektrisch parallel zu schalten, was ebenfalls einer Vergrößerung der Kühlfläche entspricht. In der Folge steigt der Flächenverbrauch bei planaren Aufbauten mit SMD-Technologie aufgrund der benötigten Kühlflächen. Die Erfindung schafft hier Abhilfe, da sie insgesamt die für die Kühlung zur Verfügung stehende Fläche durch die Anordnung der Kühleinrichtung zwischen den Platinen erhöht.

Bei einer weiteren vorteilhaften Ausführungsform ist ein gemeinsamer Sternpunkt bzw. ein Sternknoten vorgesehen, der die beiden Bestandteile der Leistungselektronik miteinander verbindet. Auf diese Weise kann der sog. Ground-Loop (Erdschleife) verhindert werden. Bevorzugt ist hierzu in der Kühleinrichtung bzw. einer Kühlplatte ein Durchbruch vorgesehen, über den die beiden Halbbrücken der 4-Switch-Buck-Boost-Topologie verbunden werden. Auf diese Weise kann in effektiver Weise EMI verringert werden.

Bei einer weiteren vorteilhaften Ausführungsform erstreckt sich das gesamte Gehäuse in einer vorgegebenen Längsrichtung und die Kühleinrichtung erstreckt sich ebenfalls in dieser Längsrichtung des Gehäuses. Dabei ist es möglich, dass es sich bei dieser Längsrichtung um die längste Ausdehnung des Gehäuses handelt. Bevorzugt erstreckt sich die Kühleinrichtung wenigstens teilweise parallel zu dieser Längsrichtung.

Bei einer weiteren vorteilhaften Ausführungsform erstreckt sich das Gehäuse in einer vorgegebenen Längsrichtung und in dieser Längsrichtung sind die Leistungselektronikeinheit und die Speicherdrossel hintereinander und/oder voneinander beabstandet. Dabei ist es möglich, dass ausgehend von der wenigstens einen Schnittstelle das Gehäuse zunächst die Leistungselektronikeinheit enthält und daran anschließend die Drosseleinrichtung. Auf diese Weise wird dem Umstand Rechnung getragen, dass die Leistungselektronikeinheit in der Regel noch eine etwas höhere Kühlleistung benötigt als die Drosseleinrichtung.

Bei einer weiteren vorteilhaften Ausführungsform weist die Elektronikeinheit wenigstens einen Treiberträger auf. Dieser Treiberträger kann dabei geeignet und bestimmt sein, weitere Elektronikelemente, beispielsweise die Leistungselektronikeinrichtung anzusteuern. Bei einer bevorzugten Ausführungsform ist diese Treibereinheit bzw. dieser Treiberträger beabstandet zu der Leistungselektronik angeordnet. Besonders bevorzugt ist die Treibereinheit weiter entfernt von der Kühleinrichtung als die Leistungselektronikeinheit. Auf diese Weise wird dem Umstand Rechnung getragen, dass die Treibereinheit weniger Kühlleistung bzw. Kühlung erfordert als die Leistungselektronikeinheit. Es wäre jedoch auch denkbar, dass auch die Treibereinheit und/oder der Treiberträger unmittelbar an der Kühleinrichtung anliegt.

Bei einer weiteren bevorzugten Ausführungsform weist die Vorrichtung zwei Treiberträger bzw. zwei Treiberteileinheiten auf und besonders bevorzugt ist die Kühleinrichtung zwischen diesen beiden Treibereinheiten angeordnet. Dabei ist es auch hier wiederum möglich, dass die Treibereinheit ebenfalls symmetrisch bezüglich einer Symmetrieebene und insbesondere bezüglich der oben genannten Symmetrieebene ausgebildet ist. Bevorzugt erstreckt sich eine Längsrichtung einer Treiberplatine oder eines Treiberträgers ebenfalls parallel zu der Längsrichtung des Gehäuses und/oder parallel zu der Längsrichtung, in der sich auch die Kühleinrichtung erstreckt.

Bevorzugt ist auf wenigstens einem Treiberträger und bevorzugt auf beiden Treiberträgern wenigstens ein Treiberelement angeordnet. Bei diesem Treiberelement kann es sich insbesondere aber nicht ausschließlich um Mosfet-Treiber handeln. Mosfet-Treiber sind Leistungsverstärker, welche insbesondere in der Lage sind, Signale mit geringer Leistung so zu verstärken, dass die Leistungsschalter innerhalb kurzer Zeit von einem sperrenden Zustand in einen leitenden Zustand geschalten werden. Je kürzer diese Umschaltzeit ist, desto geringer sind auch die Schaltverluste der Leistungsverstärker.

Der hier vorgeschlagene Aufbau und insbesondere der Aufbau mit zwei Treiberplatinen ist bevorzugt derart gestaltet, dass er die Abstände zwischen Mosfet-Treibern und Mosfets reduziert, indem die Treiberplatinen oberhalb bzw. unterhalb der jeweiligen Leistungsplatine platziert werden. Bevorzugt wird auch die Treiberelektronik nicht auf die Hochvolt- und Hochstromebene der Leistungsplatine gesetzt, was ebenfalls eine Erhöhung der Störfestigkeit und Robustheit zur Folge hat. Es werden also, wie erwähnt, die Leistungselektronik und die Treiberelektronik bevorzugt innerhalb des Gehäuses voneinander beabstandet.

Bei einer weiteren vorteilhaften Ausführungsform weist die Vorrichtung eine Logikeinheit auf. Bevorzugt ist diese Logikeinheit weiter von der Kühleinrichtung beabstandet als die Leistungselektronik und/oder diese Logikeinheit ist weiter von der Kühleinrichtung beabstandet als die Treibereinheit. Diese Logikeinheit kann dabei verwendet werden, um die Leistungselektronik, bei der es sich beispielsweise um einen DC/DC Wandler handeln kann, anzusteuern.

Dabei kann diese Logikeinheit beispielsweise eine oder mehrere Messeinrichtungen aufweisen, welche charakteristische insbesondere elektrische Eigenschaften der Leistungselektronik bestimmen. Daneben kann diese Logikeinheit auch eine Steuerung und/oder Regelung der DC/DC Wandlereinheit übernehmen.

Daneben kann die Logikeinheit auch eine Kommunikationseinrichtung aufweisen, welche dazu geeignet und bestimmt ist, mit weiteren Einrichtungen und insbesondere bzgl. der Vorrichtung externen Einrichtungen, zu kommunizieren und/oder Daten auszutauschen. Weiterhin kann die Logikeinheit auch Diagnosefunktionen hinsichtlich der Leistungselektronik durchführen.

Schließlich kann die Logikeinheit noch eine Signalerzeugungseinrichtung aufweisen, insbesondere eine Signalerzeugungseinrichtung, welche Steuersignale und insbesondere PWM-Signale zum Ansteuern von Einrichtungen der Leistungselektronik erzeugt. Insbesondere kann die Signalerzeugungseinrichtung dazu geeignet und bestimmt sein, PWM - Signale (Pulsweitenmodulationssignale) zu erzeugen. Diese Signale können zur Ansteuerung von Schalteinrichtungen der Leistungselektronik verwendet werden und insbesondere, aber nicht ausschließlich, zum Ansteuern der Leistungselektronik von Schalteinrichtungen der Leistungselektronik.

Bei einer weiteren vorteilhaften Ausführungsform ist die Speicherdrossel endseitig in dem Gehäuse angeordnet. So ist es möglich und bevorzugt, dass die Speicherdrossel an einer stirnseitigen oder endseitigen Wandung des Gehäuses anliegt. Es wäre auch denkbar und bevorzugt, dass die Speicherdrossel an wenigstens zwei das Gehäuse begrenzenden Wandungen, und insbesondere zwei Wandungen, welche senkrecht zu einander stehen anliegt.

Bei einer weiteren vorteilhaften Ausführungsform weist die Kühleinrichtung wenigstens eine Öffnung auf, durch welche eine Verbindungsleitung geführt ist. Dabei handelt es sich insbesondere um eine elektrische Verbindungsleitung, welche insbesondere Komponenten der Elektronikeinheit miteinander verbinden kann. So kann es sich beispielsweise um eine Verbindungsleitung handeln, welche Bestandteile der Leistungselektronikeinheit miteinander verbindet. So können eine oder mehrere elektrische Verbindungsleitungen vorgesehen sein, welche Teile des Leistungsverstärkers miteinander verbinden.

Dabei wäre es auch möglich, dass eine derartige Öffnung oder ein derartiger Kanal bereits in der Kühleinrichtung ausgebildet und/oder eingearbeitet ist und insbesondere einteilig mit der Kühleinrichtung ausgebildet ist, so dass keine weiteren Dichtungseinrichtungen erforderlich sind, um diesen Kanal abzudichten. Es wäre jedoch auch möglich, dass elektrische Verbindungsleitungen an einer Außenseite bzw. einer Außenwandung der Kühleinrichtung geführt sind.

Daneben können auch elektrische Verbindungsleitungen durch Bereiche der Kühleinrichtung oder durch die Öffnungen geführt werden, welche etwa Teile der Leistungselektronikeinrichtung mit den Treibern oder dergleichen verbinden. So können beispielsweise in der Kühleinrichtung Wandungen vorgesehen sein, durch welche wiederum Löcher oder Kanäle verlaufen. Dabei ist es möglich und bevorzugt, dass diese Löcher abgedichtet werden, um insbesondere beispielsweise ein Austreten von Kühlflüssigkeit zu verhindern.

Erfindungsgemäß erstreckt sich die Kühleinrichtung wenigstens abschnittsweise zwischen der ersten Schnittstelle und der zweiten Schnittstelle. Erfindungsgemäß sind daher auch die Schnittstellen symmetrisch bezüglich der oben genannten Symmetrieebene ausgebildet.

Bei einer weiteren vorteilhaften Ausführungsform weist die Kühleinrichtung einen Kanal zum Führen eines fließfähigen Mediums auf. Bei diesem fließfähigen Medium kann es sich sowohl um ein flüssiges als auch um ein gasförmiges Medium handeln. So wäre es möglich, dass es sich bei der Kühleinrichtung um eine Wasserkühleinrichtung handelt, bei der insbesondere Wasser geführt wird.

Bei einer weiteren vorteilhaften Ausführungsform ist die Kühleinrichtung in einen Kühlkreislauf eines Kraftfahrzeugs einbindbar. Dabei ist es möglich, dass die Kühleinrichtung eine eigene Pumpeneinrichtung aufweist, welche eine Kühlflüssigkeit durch die Kühleinrichtung fördert. Es wäre jedoch auch denkbar dass die Kühleinrichtung von einer Kühlmittelpumpe des Kraftfahrzeugs versorgt wird. Bei einer vorteilhaften Ausführungsform wäre es auch denkbar, dass die Kühleinrichtung eine Steuerungseinrichtung aufweist, welche eine Kühlmittelpumpe zumindest auch zu Stillstandzeiten eines Kraftfahrzeugs ansteuert.

Bei einer weiteren bevorzugten Ausführungsform weist die Kühleinrichtung auch eine Lüftereinrichtung auf, welche die Kühleinrichtung oder Bestandteile derselben belüftet. Bei einer weiteren bevorzugten Ausführungsform weist die Vorrichtung wenigstens eine Sensoreinrichtung auf, welche dazu geeignet und bestimmt ist eine Temperatur wenigstens eines Elements der Vorrichtung zu erfassen, insbesondere wenigstens eines Elements der Leistungselektronik und/oder der Speicherdrossel.

Bei einer weiteren Ausführungsform wäre es jedoch auch möglich, dass es sich bei dem fließfähigen Medium um ein Gas und insbesondere um Luft handelt. So kann beispielsweise auch eine Ventilator- oder Lüftereinheit vorgesehen sein, welche die Kühlung der Elektronikeinheit bzw. deren Elemente bewirkt.

Erfindungsgemäß sind die erste Schnittstelle und die zweite Schnittstelle benachbart zueinander angeordnet. So ist es erfindungsgemäß möglich, dass die erste und die zweite Schnittstelle im Bereich einer bestimmten Wandung vorgesehen sind, derart, dass sie jeweils von der gleichen Seite her kontaktiert werden können. Auf diese Weise kann die Anbindung der Elektronikeinheit verbessert werden.

Die vorliegende Erfindung ist weiterhin auf eine Ladeeinheit und insbesondere eine induktive Ladeeinheit gerichtet. Diese induktive Ladeeinheit weist dabei erfindungsgemäß eine Elektronikeinheit der oben beschriebenen Art auf.

Bei einer weiteren bevorzugten Ausführungsform weist die Ladeeinheit auch eine Spule auf, welche die Elektronikeinheit mit elektrischer Energie versorgt. Weiterhin weist die Ladeeinheit auch eine Energiespeichereinrichtung, wie insbesondere eine Batterie auf, welche ebenfalls in elektrisch leitender Verbindung mit der erwähnten Elektronikeinheit steht.

Die vorliegende Erfindung ist weiterhin auf eine Ladeanordnung zum elektrischen Laden von Kraftfahrzeugen mit einer Elektronikeinheit der oben beschriebenen Art gerichtet. Bevorzugt weist die Ladeanordnung wenigstens eine Schnittstelle auf, um die Elektronikeinheit elektrisch mit einem elektrischen Speichermittel und insbesondere einer Batterie des Kraftfahrzeugs zu verbinden.

Weitere Vorteile und Ausführungsformen ergeben sich aus den beigefügten Zeichnungen: Darin zeigt:
- Fig. 1: eine schematische Darstellung einer Ladeanordnung zum Laden von Kraftfahrzeugen;
- Fig. 2: eine schematische Darstellung einer erfindungsgemäßen Elektronikeinheit;
- Fig. 3: eine detailliertere Darstellung der ein Fig. 2 gezeigten Elektronikeinheit;
- Fig. 4: ein vereinfachter Schaltplan der in Fig. 2 gezeigten Elektronikeinheit;
- Fig. 5: ein modifizierter Schaltplan der in Fig. 2 gezeigten Elektronikeinheit;
- Fig. 6: ein modifizierter Schaltplan mit Darstellung der Kühleinrichtung;
- Fig. 7: eine Schaltzeichnung zur Veranschaulichung der Ansteuerung der Leistungselektronik;
- Fig. 8: eine zeitlicher Stromverlauf;
- Fig. 9: eine Schnittdarstellung der Drosseleinheit;
- Fig. 10: eine perspektivische Darstellung der Drosseleinheit;
- Fig. 11: eine weitere Schnittdarstellung einer Drosseleinheit; und
- Fig. 12: eine Schnittdarstellung einer Drosseleinheit mit geteilten Spulen.

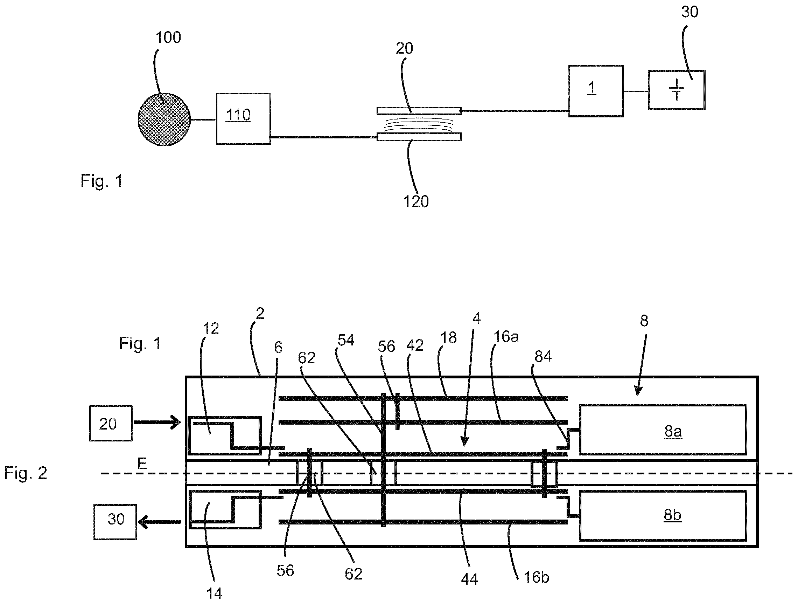

Fig. 1 zeigt eine Ladeanordnung zum Laden von Kraftfahrzeugen. Dabei wird von einem Stromnetz 100 aus eine üblicherweise stationär montierte Versorgungseinheit mit Strom versorgt. Diese Versorgungseinheit weist eine Elektronikeinheit 110 auf, welche diverse Komponenten aufweist, wie etwa eine PFC-Schaltung (Power Factor Correction, Leistungsfaktor-Korrektur), einen Inverter oder dergleichen.

Von dieser Elektronikeinheit 110 wird eine erste Spuleneinrichtung 120 versorgt, welche wiederum induktiv eine fahrzeugseitige Spuleneinrichtung 20 versorgt. Diese Spuleneinrichtung 20 wiederum versorgt die im Rahmen der vorliegenden Erfindung genauer beschriebene Elektronikeinheit 1. Über den Ausgang der Elektronikeinheit 1 wird eine Fahrzeugbatterie 30 versorgt und mithin geladen.

Figur 2 zeigt eine schematische Darstellung einer erfindungsgemäßen Elektronikeinheit 1. Diese Elektronikeinheit 1 weist ein Gehäuse 2 auf, welches sich in einer Längsrichtung L erstreckt sowie einer Höhenrichtung H sowie einer zu beiden Richtungen senkrecht und damit auch zu der Figurenebene senkrecht stehenden Breitenrichtung. Diese Elektronikeinheit weist eine erste Schnittstelle 12 auf, um etwa eine Spule oder eine Spuleneinheit 20 anzubinden. Damit handelt es sich hier bei der Schnittstelle 12 insbesondere um eine Eingangsschnittstelle, welche zum Aufnehmen von Strömen von der Spuleneinheit 20 geeignet und bestimmt ist.

Weiterhin weist die Elektronikeinheit 1 eine zweite Schnittstelle 14 auf, über welche beispielsweise eine Speichereinrichtung 30, wie etwa eine Fahrzeugbatterie, angebunden werden kann. Bei dieser Schnittstelle handelt es sich damit insbesondere um eine Ausgangsschnittstelle.

Das Bezugszeichen 6 kennzeichnet schematisch eine Kühleinrichtung. Diese Kühleinrichtung erstreckt sich hier ebenfalls in der Längsrichtung L. Dabei kann es sich insbesondere um eine Wasserkühleinrichtung handeln, bei der Wasser ebenfalls in der Längsrichtung L transportiert wird. Die Kühleinrichtung kann dabei etwa als Wärmetauscher ausgeführt sein.

Das Bezugszeichen 4 kennzeichnet schematisch eine Leistungselektronikeinrichtung, welche hier zwei Platinen 42 und 44 aufweist. Zwischen diesen beiden Leistungselektronikplatinen 42, 44 verläuft die Kühleinrichtung, sodass auf diese Weise eine effizientere Kühlung der gesamten Leistungselektronik 4 möglich ist. Bevorzugt erstrecken sich sowohl die Leistungselektronikeinrichtung als auch die Kühleinrichtung in der besagten Längsrichtung L und in der hierzu senkrechten Breitenrichtung.

Das Bezugszeichen 56 kennzeichnet eine elektrische Verbindungsleitung, welche die beiden Bestandteile 42 und 44 der Leistungselektronikeinheit 4 miteinander verbindet. Diese elektrische Verbindungsleitung erstreckt sich dabei durch die Kühleinrichtungen hindurch und insbesondere durch einen Kanal 62 der Kühleinrichtung hindurch. Dieser Kanal ist, wie oben erwähnt, abgedichtet, sodass ein Austritt von Flüssigkeit aus der Kühleinrichtung in das Innere des Gehäuses 2 verhindert wird.

Das Bezugszeichen 8 kennzeichnet in seiner Gesamtheit eine Drosseleinrichtung. Diese weist Drosseleinrichtungseinheiten 8a und 8b auf. Man erkennt, dass sich die Kühleinrichtung auch zwischen diesen beiden Drosseleinheiten 8a und 8b erstreckt, sodass auch eine effizientere Kühlung dieser Drosseleinheiten möglich ist. Auch erkennt man, dass die Drosseleinrichtung 8 in der Längsrichtung L des Gehäuses beabstandet zu der Leistungselektronikeinheit 4 angeordnet ist. Auf diese Weise ist eine effiziente Kühlung sowohl der Leistungselektronikeinheit 4 als auch der Drosseleinrichtung 8 möglich. Auch die Drosseleinrichtung kann über eine Substanz und insbesondere über eine thermisch leitende Substanz mit der Kühleinrichtung 6 in Verbindung stehen.

Das Bezugszeichen 84 kennzeichnet elektrische Verbindungsleitungen zwischen der Leistungselektronikeinrichtung 4 bzw. den Leistungselektronikelementen 42 und 44 einerseits und den beiden Drosseleinrichtungsbestandteilen 8a und 8b andererseits.

Das Bezugszeichen 16a kennzeichnet eine erste Treiberplatine bzw. ein erstes Treiberelement und das Bezugszeichen 16b ein zweites Treiberelement. Man erkennt, dass diese Treiberelemente ebenfalls hier symmetrisch bezüglich einer Ebene E und ebenfalls symmetrisch bezüglich der Kühleinrichtung 6 aufgebaut sind. Das Bezugszeichen 54 bezieht sich auf eine weitere elektrische Verbindungseinrichtung, welche ebenfalls zum Verbinden der Treibereinheiten und hier der Leistungselektronik dient.

Insgesamt erkennt man, dass hier sowohl die Elemente 8a und 8b der Drosseleinrichtung als auch die Elemente 42 und 44 der Leistungselektronikeinrichtung parallel bezüglich einer Schnittebene E angeordnet sind.

Das Bezugszeichen 18 kennzeichnet eine Logikeinheit, die hier ebenfalls als Platine aufgebaut sein kann. Diese Logikeinheit steht hier über eine elektrische Verbindungsleitung 55 mit der Treibereinrichtung und gegebenenfalls auch über die elektrische Leitung 54 mit der Leistungselektronikeinheit in elektrisch leitender Verbindung.

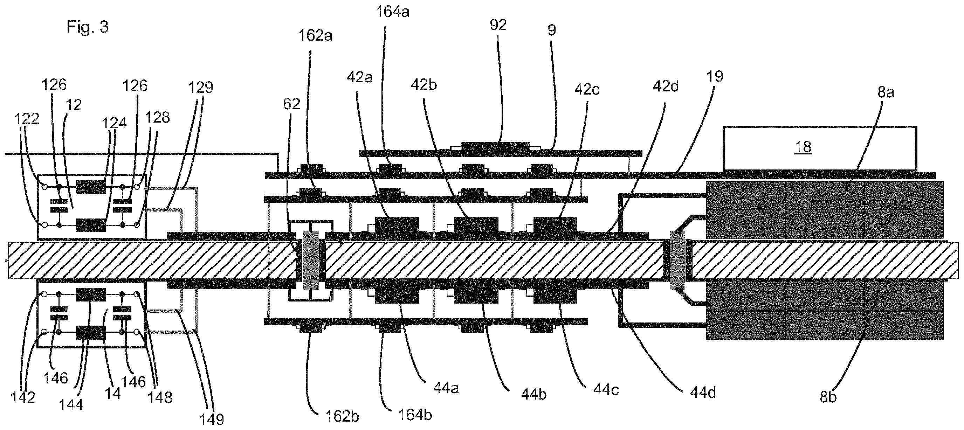

Fig. 3 zeigt eine detailliertere Darstellung der Elektronikeinheit 1. Dabei erkennt man den genaueren Aufbau der Schnittstellen 12 und 14. Die Schnittstelle 12 weist Eingangskontakte 122 und Ausgangskontakte 128 auf. Die Bezugszeichen 126 beziehen sich auf Kondensatoren und die Bezugszeichen 124 auf weitere elektronische Elemente, welche gemeinsam dazu dienen, das Eingangssignal zu glätten.

Entsprechend weist auch die zweite Schnittstelle 14 entsprechende elektronische Komponenten (Kondensatoren 146 und elektronische Elemente 144) auf, welche zum Glätten von Spannungen bzw. Strömen dienen. Die Bezugszeichen 148 und 142 beziehen sich wiederum auf elektrische Kontakte. Über Verbindungsleitungen 129 und 149 stehen die beiden Schnittstellen jeweils mit der Leistungselektronikeinrichtung in elektrischer Verbindung. Damit bildet die Schnittstelle 12 einen HVDV - Eingang und die Schnittstelle 14 einen HVDC - Ausgang.

Die beiden Leistungselektronikeinheiten 42 und 44 (vgl. Fig. 2) weisen jeweils Platinen 42d, 44d auf, an denen jeweils mehrere SMD Bauteile 42a, 42b, 42c bzw. 44a, 44b, 44c angeordnet sind. Dabei liegen die Platinen 42d, 44d direkt an der Kühleinrichtung 6 an.

Wie oben erwähnt, weist die Kühleinrichtung 6 einen Kanal auf, durch den elektrische Leitungen geführt werden. Die beiden Treiberplatinen 16a und 16b (vgl. Fig. 2) weisen wiederum Treiberelemente wie insbesondere aber nicht ausschließlich Mosfet-Treiber 162a, 164a, 162b, 164b auf. Diese Mosfet-Treiber verstärken, wie oben erwähnt die von einem Mikrokontroller erzeugten Signale zur Ansteuerung der Schalteinrichtungen der Leistungselektroniken (etwa die oben erwähnten SMD-Bauteile). Auch die Treiberelemente sind bevorzugt als SMD-Bauteile ausgeführt.

Das Bezugszeichen 9 kennzeichnet eine Mikrokontroller-Platine, welche wie oben gesagt unter anderem zum Messen, Steuern und Regeln des DCDC-Wandlers dient. Das Bezugszeichen 19 kennzeichnet eine AUX-Platine. Diese dient bevorzugt als Sammel- und Verteilstelle für elektrische Signale. Daneben dient diese Mikrokontroller Platine 9 auch als Trägerplatine für eine Hilfsversorgung (Auxiliary Supply). Die AUX-Platine 9 kann von einer nicht genauer dargestellten LV - Schnittstelle versorgt werden.

Das Bezugszeichen 18 kennzeichnet wiederum die eigentliche Logikeinheit bzw. den AUX-Supply. Dieser weist bevorzugt wenigstens einen galvanisch getrennten DCDC - Wandler auf, der eine Leistung von ca. 60 W aufweist. Dieser DCDC - Wandler erzeugt bevorzugt die Gleichspannungen, mit denen die Mess- und Steuerelektroniken versorgt werden

Auch erkennt man hier wieder die Drosseleinrichtungseinheiten 8a, 8b, die wie oben erwähnt in Serie geschaltet sind und an gegenüberliegenden Seiten der Kühleinrichtung 6 angeordnet sind. Diese Kühleinrichtung 6 weist bevorzugt eine Kühlplatte auf.

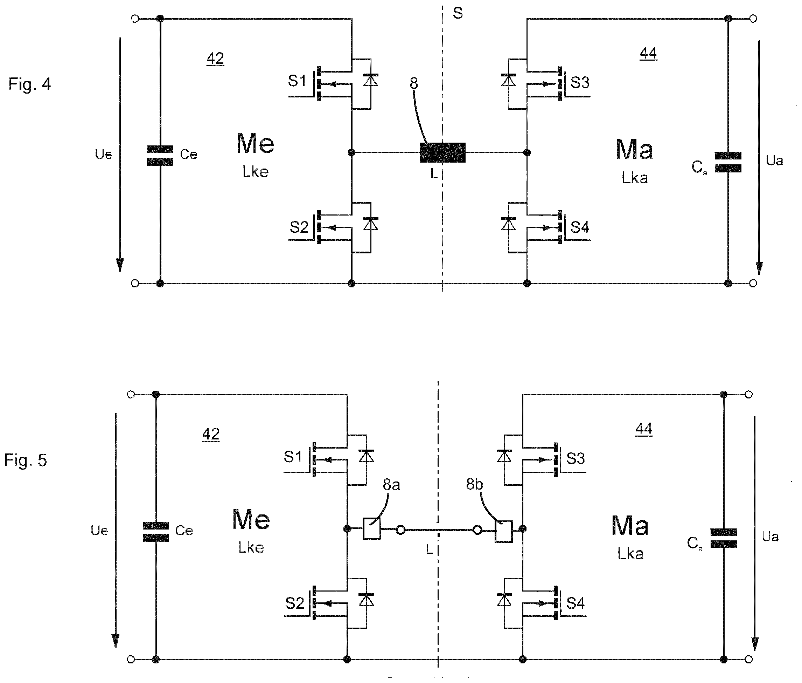

Fig. 4 zeigt ein vereinfachtes Schaltbild eines hier vorgesehenen DCDC- Wandlers. Dabei liegt an der Leistungselektronikeinheit eine Eingangsspannung Ue an einem Eingangskondensator Ce. Daneben weist diese Leistungselektronikeinheit zwei Schalteinrichtungen S1, S2 auf. Auf diese Weise wird eine erste Masche Me ausgebildet welche im Betrieb eine Kommutierungsinduktivität Lke ausbildet.

Das Bezugszeichen 44 kennzeichnet die zweite Leistungselektronikeinheit, welche entsprechende Bauteile aufweist, nämlich die Schalteinrichtungen S3 und S4 sowie den Ausgangskondensator Ca. Das Bezugszeichen Ua kennzeichnet die Ausgangsspannung. Auch durch diese Anordnung wird eine Masche Ma ausgebildet, welche ebenfalls eine Kommutierungsinduktivität Lka ausbildet.

Man erkennt, dass diese beiden Schalteinheiten 42 und 44 symmetrisch aufgebaut, sind. Das Bezugszeichen S kennzeichnet eine Symmetrieachse. Die beiden Schalteinheiten stehen über die Drosseleinrichtung 8 in elektrischer Verbindung. Die Schalteinrichtungen S1 - S4 sind bevorzugt, wie oben ausgeführt, als SMD-Bauteile ausgebildet.

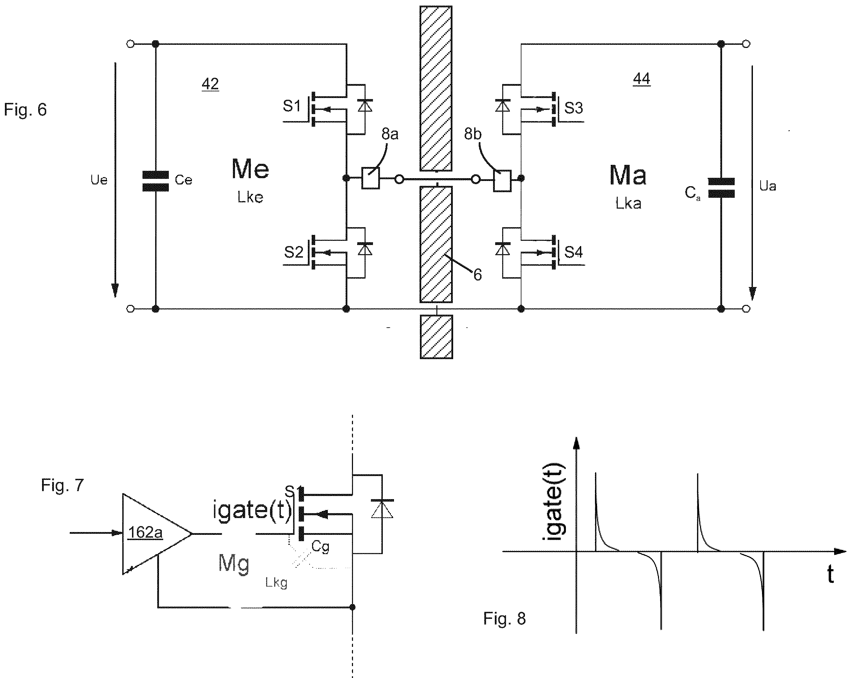

Fig. 5 zeigt eine modifizierte Schaltung, bei der die Drosseleinrichtung 8 in zwei in Serie geschaltete Drosseleinrichtungseinheiten 8a und 8b aufgeteilt wurde, wobei die Symmetrieebene zwischen diesen beiden Drosseleinrichtungseinheiten 8a und 8b verläuft. Wie in Fig. 6 gezeigt, verläuft auch die Kühleinrichtung 6 zwischen den beiden Drosseleinrichtungseinheiten 8a und 8b.

Fig. 7 veranschaulicht die Beschaltung einer der Schalteinrichtungen S1 - S4. Dabei wird zunächst einem Treiber 162a ein PWM-Signal von einem Mikrocontroller zugeführt. Dieser Treiber erzeugt einen Strom igate(t), der zum Ansteuern der jeweiligen Schalteinrichtung dient.

Fig. 8 kennzeichnet einen entsprechenden zeitlichen Verlauf des Stroms igate(t). Man erkennt, dass dieser Verlauf sehr stark ausgeprägte Spitzen aufweist. Werden Mosfets geschaltet, so sollten die Gatekapazitäten schnell umgeladen werden. Die Umladeströme werden als Gateströme bezeichnet, welche den in Fig. 8 genauer gezeigten Verlauf aufweisen. Bevorzugt sollte hier die entsprechende in Fig. 7 dargestellte Masche Mg eine möglichst geringe Fläche aufspannen. Ist die Fläche dieser Masche groß, werden aufgrund der steilen Flanken des Gatestroms unerwünschte EMI generiert. Weiterhin wirkt sich nachteilig die mit einer steigenden Fläche der Masche Mg ebenfalls steigende Kommutierungsinduktivität Lkg auf die maximal zu erreichende Schaltgeschwindigkeit aus.

Weiterhin wirkt auch eine möglichst geringe Fläche der Masche Mg möglichen Stromeinflüssen durch z. B. magnetische Streufelder von außen entgegen. Damit wird auch dem ungewollten Einschalten eines Mosfets vorgebeugt und die Störfestigkeit und Robustheit des DCDC-Wandlers erhöht.

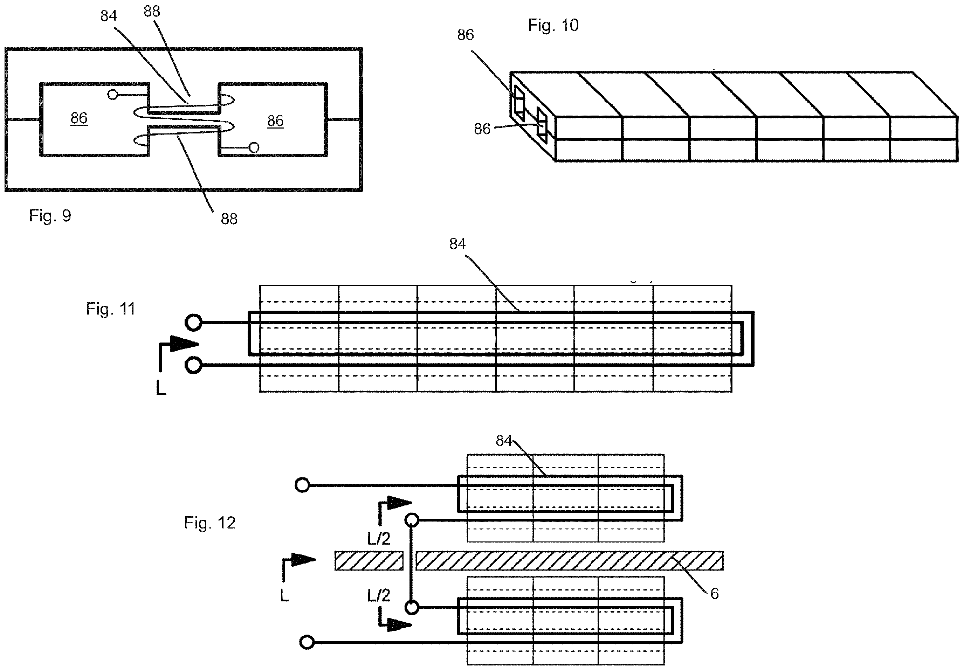

Fig. 9 zeigt eine Darstellung einer Speicherinduktivität bzw. einer Drosseleinrichtung 8. Diese weist eine nur schematisch dargestellte Spule 85 auf, die um einen Kernabschnitt 88 gewickelt ist. Dabei bildet diese Drosseleinrichtung 8 zwei Luftspalte 86 aus. Fig. 10 zeigt eine Drosseleinrichtung 8, welche sich hier aus 6 hintereinander angeordneten Kernsätzen zusammensetzt.

Fig. 11 zeigt eine schematische Darstellung der Speicherinduktivität bzw. Drosseleinrichtung 8. Hier ist wieder schematisch der Luftspalt mit der Spule bzw. Wicklung 85 gezeigt, wobei diese Wicklung hier zwei Windungen aufweist.

Fig. 12 zeigt schematisch eine Speicherinduktivität bzw. Drosseleinrichtung, die hier jedoch in zwei seriell geschaltete Wicklungseinheiten 8a und 8b aufgeteilt ist, zwischen denen sich die Kühleinrichtung 6 erstreckt. Diese beiden Wicklungseinheiten weisen jeweils zwei Wicklungen auf und die elektrische Verbindung dieser beiden Wicklungseinheiten erstreckt sich durch die Kühleinrichtung hindurch.

### Bezugszeichenliste

- 1: Elektronikeinheit
- 2: Gehäuse
- 4: Leistungselektronikeinrichtung / Leistungselektronik
- 6: Kühleinrichtung
- 8: Drosseleinrichtung
- 8a, 8a: Drosseleinrichtungseinheiten
- 9: Mikrokontroller - Platine
- 12: erste Schnittstelle
- 14: zweite Schnittstelle
- 16a: erste Treiberplatine / erstes Treiberelement
- 16b: zweite Treiberplatine / erstes Treiberelement
- 18: Logikeinheit
- 19: AUX-Platine
- 20: Spuleneinheit
- 30: Speichereinrichtung
- 42, 44: Platinen / Leistungselektronikelementen
- 42a,b,c: SMD-Bauteile
- 44a, b, c: SMD-Bauteile
- 42d, 44d: Platinen
- 54: elektrische Verbindungsleitung
- 56: elektrische Verbindungsleitung
- 62: Kanal der Kühlung
- 84: elektrische Verbindungsleitungen
- 85: Wicklung
- 86: Luftspalt
- 88: Vorsprung
- 100: Stromnetz
- 110: Elektronikeinheit
- 120: Spuleneinrichtung
- 122: Eingangskontakte
- 124, 144: elektronische Elemente
- 126, 146: Kondensatoren
- 128: Ausgangskontakte
- 129, 149: Verbindungsleitungen
- 142, 148: elektrische Kontakte
- 162a, 164a: Mosfet-Treiber
- 162b, 164b: Mosfet-Treiber

- L: Längsrichtung
- H: Höhenrichtung
- E: Ebene
- Ue: Eingangsspannung
- Ce: Eingangskondensator
- S1-S4: Schalteinrichtungen
- Ca: Ausgangskondensator
- Ua: Ausgangsspannung
- Ma, Me, Mg: Masche
- Lke, Lka: Kommutierungsinduktivitäten
- Lkg: Kommutierungsinduktivität
- Igate(t): Gatestrom

## Patentansprüche

1. Elektronikeinheit (1), wobei die Elektronikeinheit ein DC-DC Wandler ist, insbesondere zum Betrieb eines induktiven Ladesystems für Kraftfahrzeuge, mit einem Gehäuse (2), innerhalb dessen eine Leistungselektronikeinheit (4) mit wenigstens einem Leistungselektronikelement angeordnet ist, mit einer ersten Schnittstelle (12), um die Elektronikeinheit (1) elektrisch wenigstens mittelbar mit einer Spuleneinheit zu verbinden, mit einer zweiten Schnittstelle (14), um die Elektronikeinheit (1) wenigstens mittelbar elektrisch mit einer Fahrzeugbatterie zu verbinden und mit einer Kühleinrichtung (6) welche zum Kühlen der Leistungselektronikeinheit (4) geeignet und bestimmt ist, wobei sich die Kühleinrichtung wenigstens abschnittsweise zwischen Bestandteilen der Leistungselektronikeinheit (4) erstreckt und sich die Kühleinrichtung (6) vollständig in wenigstens einer Richtung durch die Leistungselektronikeinheit (4) hindurch erstreckt und in einer Längsrichtung des Gehäuses (2) beidseitig über die Leistungselektronikeinheit (4) hinausragt, wobei die Leistungselektronikeinheit symmetrisch bezüglich einer vorgegebenen Symmetrieebene (E) angeordnet ist, wobei die Symmetrieebene (E) durch die Längsrichtung der Kühleinrichtung verläuft, die Elektronikeinheit somit symmetrisch um die Kühleinrichtung angeordnet ist, und die Kühleinrichtung sich wenigstens abschnittsweise zwischen der ersten Schnittstelle (12) und der zweiten Schnittstelle (14) erstreckt, wobei die Elektronikeinheit (1) symmetrisch um die Kühleinrichtung (6) angeordnet ist, wobei die erste Schnittstelle (12) und die zweite Schnittstelle (14) benachbart zueinander und im Bereich einer bestimmten Wandung angeordnet sind, so dass sie jeweils von der gleichen Seite her kontaktiert werden
**dadurch gekennzeichnet, dass**
die erste Schnittstelle (12) und die zweite Schnittstelle (14) symmetrisch bezüglich der Symmetrieebene (E) ausgebildet sind.

2. Elektronikeinheit (1) nach Anspruch 1,
**dadurch gekennzeichnet, dass**
die Elektronikeinheit (1) eine Drosseleinrichtung (8) aufweist.

3. Elektronikeinheit (1) nach wenigstens einem der vorangegangenen Ansprüche
**dadurch gekennzeichnet, dass**
die Leistungselektronikeinheit einen ersten Leistungselektronikträger (42) und einen zweiten Leistungselektronikträger (44) aufweist und sich die Kühleinrichtung (6) wenigstens abschnittsweise zwischen diesem ersten Leistungselektronikträger (42) und dem zweiten Leistungselektronikträger erstreckt.

4. Elektronikeinheit (1) nach wenigstens einem der vorangegangenen Ansprüche
**dadurch gekennzeichnet, dass**
sich das Gehäuse in einer vorgegebenen Längsrichtung erstreckt und die Kühleinrichtung (6) sich ebenfalls in dieser Längsrichtung des Gehäuses erstreckt.

5. Elektronikeinheit (1) nach Anspruch 2,
**dadurch gekennzeichnet, dass**
sich das Gehäuse in einer vorgegebenen Längsrichtung erstreckt und in dieser Längsrichtung die Leistungselektronikeinheit (4) und die Drosseleinrichtung (8) voneinander beabstandet sind.

6. Elektronikeinheit (1) nach wenigstens einem der vorangegangenen Ansprüche
**dadurch gekennzeichnet, dass**
die Elektronikeinheit (1) wenigstens einen Treiber- Träger (16) aufweist.

7. Elektronikeinheit (1) nach wenigstens einem der vorangegangenen Ansprüche
**dadurch gekennzeichnet, dass**
die Kühleinrichtung (6) wenigstens eine Öffnung (62) aufweist, durch welche eine elektrische Verbindungsleitung geführt ist.

8. Elektronikeinheit (1) nach wenigstens einem der vorangegangenen Ansprüche
**dadurch gekennzeichnet, dass**
die Kühleinrichtung (6) einen Kanal (66) zum Führen eines fließfähigen Kühlmediums aufweist.

9. Ladeanordnung zum elektrischen Laden von Kraftfahrzeugen mit einer Elektronikeinheit (1) nach wenigstens einem der vorangegangenen Ansprüche.

## Claims

1. Electronic unit (1), wherein the electronic unit being a DC-DC converter, in particular for operating an inductive charging system for motor vehicles, having a housing (2) within which a power electronics unit (4) having at least one power electronics element is arranged, having a first interface (12) in order to connect the electronic unit (1) electrically at least indirectly to a coil unit, having a second interface (14) in order to connect the electronic unit (1) at least indirectly electrically to a vehicle battery, and having a cooling device (6) which is suitable and intended for cooling the power electronics unit (4), wherein the cooling device extending at least in sections between components of the power electronics unit (4), and the cooling device (6) extending completely through the power electronics unit (4) in at least one direction and projecting beyond the power electronics unit (4) on both sides in a longitudinal direction of the housing (2), wherein the power electronics unit being arranged symmetrically with respect to a predetermined plane of symmetry (E), wherein the plane of symmetry (E) running through the longitudinal direction of the cooling device, the electronics unit thus being arranged symmetrically around the cooling device, and the cooling device extending at least in sections between the first interface (12) and the second interface (14), wherein the electronic unit (1) is arranged symmetrically around the cooling device (6), wherein the first interface (12) and the second interface (14) are arranged adjacent to each other and in the region of a certain wall so that they are contacted from the same side in each case,
**characterized in that**
the first interface (12) and the second interface (14) are symmetrical with respect to the plane of symmetry (E).

2. Electronic unit (1) according to claim 1,
**characterized in that**
the electronic unit (1) has a throttle device (8).

3. Electronic unit (1) according to at least one of the preceding claims,
**characterized in that**
the power electronics unit has a first power electronics carrier (42) and a second power electronics carrier (44), and the cooling device (6) extends at least in sections between this first power electronics carrier (42) and the second power electronics carrier.

4. Electronic unit (1) according to at least one of the preceding claims,
**characterized in that**
the housing extends in a predetermined longitudinal direction and the cooling device (6) also extends in this longitudinal direction of the housing.

5. Electronic unit (1) according to claim 2,
**characterized in that**
the housing extends in a predetermined longitudinal direction and in this longitudinal direction the power electronics unit (4) and the throttle device (8) are spaced apart from each other.

6. Electronic unit (1) according to at least one of the preceding claims,
**characterized in that**
the electronics unit (1) has at least one driver carrier (16).

7. Electronic unit (1) according to at least one of the preceding claims,
**characterized in that**
the cooling device (6) has at least one opening (62) through which an electrical connection line is guided.

8. Electronic unit (1) according to at least one of the preceding claims,
**characterized in that**
the cooling device (6) has a channel (66) for conducting a flowable cooling medium.

9. Charging arrangement for electrically charging motor vehicles with an electronic unit (1) according to at least one of the preceding claims.

## Revendications

1. Unité électronique (1), dans laquelle l'unité électronique est un convertisseur CC-CC, en particulier destinée à faire fonctionner un système de charge inductif pour véhicules à moteur, avec un boîtier (2), à l'intérieur duquel est disposée une unité électronique de puissance (4) avec au moins un élément électronique de puissance, avec une première interface (12) pour raccorder l'unité électronique (1) électriquement au moins indirectement à une unité de bobine, avec une deuxième interface (14) pour raccorder l'unité électronique (1) au moins indirectement électriquement à une batterie de véhicule, et avec un dispositif de refroidissement (6), lequel est adapté pour et se destine à refroidir l'unité électronique de puissance (4), dans laquelle le dispositif de refroidissement s'étend au moins par endroits entre des éléments constitutifs de l'unité électronique de puissance (4) et le dispositif de refroidissement (6) s'étend en totalité dans au moins une direction à travers l'unité électronique de puissance (4) et dépasse de part et d'autre de l'unité électronique de puissance (4) dans une direction longitudinale du boîtier (2), dans laquelle l'unité électronique de puissance est disposée de manière symétrique par rapport à un plan de symétrie (E) prédéfini, dans laquelle le plan de symétrie (E) s'étend à travers la direction longitudinale du dispositif de refroidissement, l'unité électronique est ainsi disposée de manière symétrique autour du dispositif de refroidissement, et le dispositif de refroidissement s'étend au moins par endroits entre la première interface (12) et la deuxième interface (14), dans laquelle l'unité électronique (1) est disposée de manière symétrique autour du dispositif de refroidissement (6), dans laquelle la première interface (12) et la deuxième interface (14) sont disposées de manière adjacente l'une par rapport à l'autre et dans la zone d'une paroi définie de sorte qu'elles sont mises en contact respectivement depuis le même côté,
**caractérisée en ce que**
la première interface (12) et la deuxième interface (14) sont réalisées de manière symétrique par rapport au plan de symétrie (E).

2. Unité électronique (1) selon la revendication 1,
**caractérisée en ce que**
l'unité électronique (1) présente un dispositif d'étranglement (8).

3. Unité électronique (1) selon au moins l'une quelconque des revendications précédentes,
**caractérisée en ce que**
l'unité électronique de puissance présente un premier support électronique de puissance (42) et un deuxième support électronique de puissance (44) et le dispositif de refroidissement (6) s'étend au moins par endroits entre ledit premier support électronique de puissance (42) et le deuxième support électronique de puissance.

4. Unité électronique (1) selon au moins l'une quelconque des revendications précédentes,
**caractérisée en ce que**
le boîtier s'étend dans une direction longitudinale prévue et le dispositif de refroidissement (6) s'étend également dans ladite direction longitudinale du boîtier.

5. Unité électronique (1) selon la revendication 2,
**caractérisée en ce que**
le boîtier s'étend dans une direction longitudinale prédéfinie et l'une électronique de puissance (4) et le dispositif d'étranglement (8) sont espacés l'un de l'autre dans ladite direction longitudinale.

6. Unité électronique (1) selon au moins l'une quelconque des revendications précédentes,
**caractérisée en ce que**
l'unité électronique (1) présente au moins un support de pilote (16).

7. Unité électronique (1) selon au moins l'une quelconque des revendications précédentes,
**caractérisée en ce que**
le dispositif de refroidissement (6) présente au moins une ouverture (62), à travers laquelle une ligne de raccordement électrique est guidée.

8. Unité électronique (1) selon au moins l'une quelconque des revendications précédentes,
**caractérisée en ce que**
le dispositif de refroidissement (6) présente un canal (66) destiné à guider un agent de refroidissement pouvant s'écouler.

9. Ensemble de charge destiné à charger électriquement des véhicules à moteur avec une unité électronique (1) selon au moins l'une quelconque des revendications précédentes.
